# NEUE EUROPÄISCHE PATENTSCHRIFT

(11) **EP 1 030 894 B2**
(45) Veröffentlichungstag und Bekanntmachung des Hinweises auf die Entscheidung über den Einspruch: **28.10.2009**
(45) Hinweis auf die Patenterteilung: 02.07.2003
(21) Anmeldenummer: 98961106.6
(22) Anmeldetag: 28.10.1998
(51) Int. Cl.: C09D 5/10, C09D 163/00

(54) **LEITFÄHIGE, ORGANISCHE BESCHICHTUNGEN**
CONDUCTIVE ORGANIC COATINGS
REVETEMENTS ORGANIQUES CONDUCTEURS

(30) Priorität: 05.11.1997 DE 19748764
(43) Veröffentlichungstag der Anmeldung: 30.08.2000
(73) Patentinhaber: Henkel AG & Co. KGaA, 40589 Düsseldorf (DE)
(72) Erfinder: WICHELHAUS, Winfried, D-40822 Mettmann (DE); LORENZ, Wolfgang, D-40699 Erkrath (DE); KUNZ, Andreas, D-42855 Remscheid (DE); KREY, Wolfgang, D-42113 Wuppertal (DE)
(86) Internationale Anmeldenummer: PCT/EP1998/006824
(87) Internationale Veröffentlichungsnummer: WO 1999/024515

(56) Entgegenhaltungen:
- WO-A-94/09051
- US-A- 4 748 194
- US-A- 5 001 173
- US-A- 5 260 120
- US-A- 5 429 880
- CHEMICAL ABSTRACTS, vol. 114, no. 20, 20. Mai 1991 Columbus, Ohio, US; abstract no. 186825, HENTSCHEL, K.H. E.A.: "Polyurethane-modfied epoxy resin networks. Effects of binders and amine hardeners" XP002100271 & POLYM. MATER. SCI., Bd. 63, - 1990 Seiten 921-925,
- CHEMICAL ABSTRACTS, vol. 110, no. 4, 23. Januar 1989 Columbus, Ohio, US; abstract no. 25095, INAIKE, T. E.A.: "Rubber-modified epoxy adhesive compositions for oily steel plates" XP002100272 & JP 63 205379 A (UBE INDUSTRIES) 24. August 1988
- Shell Material Data Sheet Nr. 23 "EPON* RESIN 828"

## Beschreibung

Die vorliegende Erfindung betrifft leitfähige und schweißbare Korrosionsschutzzusammensetzungen zur Beschichtung von Metalloberflächen sowie ein Verfahren zu Beschichtung von Metalloberflächen mit elektrisch leitfähigen organischen Beschichtungen.

In der metallverarbeitenden Industrie, insbesondere beim Bau von Kraftfahrzeugen müssen die metallischen Bestandteile der Erzeugnisse vor Korrosion geschützt werden Nach herkömmlichen Stand der Technik werden dabei die Bleche im Walzwerk zunächst mit Korrosionsschutzölen beschichtet und vor der Verformung und dem Stanzen ggf. mit Ziehfetten beschichtet. Im Kraftfahrzeugbau werden dabei für die Karosserie bzw. Karosserieteile entsprechend geformte Blechteile ausgestanzt und unter Verwendung von besagten Ziehfetten oder -ölen im Tiefziehverfahren verformt, dann im allgemeinen durch Schweißen und/oder Bördeln und/oder Kleben zusammengefügt und anschließend aufwendig gereinigt. Daran schließen sich die korrosionsschützenden Oberflächenvorbehandlungen wie Phosphatierung und/oder Chromatierung an, worauf eine erste Lackschicht mittels Elektrotauchlackierung auf die Bauteile aufgebracht wird. In der Regel folgt dieser ersten Elektrotauchlackierung, insbesondere im Falle von Automobilkarosserien die Aufbringung mehrerer weiterer Lackschichten.

Es besteht Bedarf, einfachere Herstellungsverfahren zu finden, die es erlauben, bereits vorbeschichtete Bleche schweißen zu können und in bewährter Weise elektrotauchlackieren zu können. So gibt es eine Reihe von Verfahren, bei denen im Anschluß an die Phosphatierung und/oder Chromatierung im sogenannten Coil-Coating-Verfahren eine mehr oder weniger leitfähige organische Beschichtung aufgebracht wird. Dabei sollen diese organischen Beschichtungen in der Regel so beschaffen sein, daß sie genügende elektrische Leitfähigkeit besitzen um elektrische Punktschweißverfahren nicht zu beeinträchtigen. Außerdem sollen diese Beschichtungen mit herkömmlichen Elektrotauchlacken beschichtbar sein. Weiterhin sollen die derartig beschichteten Bleche mit reduzierter Verwendung von Tiefziehfetten bzw. -ölen stanz- und umformbar sein. Insbesondere in der Automobilindustrie werden dabei in neuerer Zeit neben normalen Stahlblechen vermehrt auch die nach den verschiedensten Verfahren verzinkten und/oder legierungsverzinkten Stahlbleche, sowie Bleche aus Aluminium und Magnesium eingesetzt.

Die Beschichtung von Stahlblechen mit organischen Beschichtungen, die schweißbar sind und die direkt im Walzwerk nach dem sogenannten Coil-Coating-Verfahren aufgebracht werden sind im Prinzip bekannt.

So beschreibt die DE-C-3412234 einen gleitfähigen und schweißbaren Korrosionsschutzprimer für elektrolytisch dünnverzinktes, phosphatiertes oder chromatiertes und verformbares Stahlblech. Dieser Korrosionsschutzprimer besteht aus einer Mischung von über 60 % Zink, Aluminium, Graphit und/oder Molybdändisulfid sowie einem weiteren Korrosionsschutzpigment und 33 bis 35 % eines organischen Bindemittels sowie etwa 2 % eines Dispergierhilfsmittels oder Katalysators. Als organisches Bindemittel werden Polyesterharze und/oder Epoxidharze sowie deren Derivate vorgeschlagen. Es wird angenommen, daß diese Technologie die Grundlage des in der Industrie unter dem Namen "Bonazinc 2000" bekannten Beschichtungsmittels darstellt. Obwohl dieses Verfahren bereits einige Vorzüge gegenüber der eingangs geschilderten Vorgehensweise - vorübergehender Korrosionsschutz mit Korrosionsschutzölen, gefolgt von nachträglicher Entfettung nach dem Zusammenfügen der metallischen Bauteile - bietet, ist das in der DE-C-3412234 beschriebene Verfahren noch stark verbesserungsbedürftig:
- Diese Beschichtung ist nicht ausreichend punktschweißbar
- Die Einbrenntemperatur für derartige Beschichtungen liegt mit 250 bis 260 °C Peak Metal Temperature (PMT) noch zu hoch. Viele neuartige Stähle mit "Bake-Hardening"-Effekt können für derartig hohe Einbrenntemperaturen nicht eingesetzt werden.
- Die Lackhaftung auf den vorbehandelten Substraten, vorzugsweise verzinkte Stähle, ist nicht immer ausreichend, insbesondere wenn stärkere Umformungen der Bleche im Automobilpresswerk vorgenommen werden.

Gemäß der Lehre der DE-C-3412234 kann das organische Bindemittel aus Polyesterharzen und/oder Epoxidharzen sowie deren Derivaten bestehen. Konkret genannt werden ein Epoxid/Phenyl-Prekondensat, ein Epoxyester sowie lineare ölfreie Mischpolyester auf Basis Terephthalsäure.

Die EP-A-573015 beschreibt ein organisches beschichtetes Stahl-Verbundblech bestehend aus einer ein oder zweiseitig mit einer Zink oder Zinklegierung beschichteten Oberfläche, die mit einem Chromatfilm versehen ist und einer darauf befindlichen organischen Beschichtung mit einer Schichtstärke von 0,1 bis 5 µm. Die organische Beschichtung ist aus einer Primer-Zusammensetzung gebildet, die aus einem organischen Lösungsmittel, einem Epoxidharz mit einem Molekulargewicht zwischen 500 und 10.000, einem aromatischen Polyamin und einer Phenol- oder Cresolverbindung als Beschleuniger besteht. Weiterhin enthält die Primer-Zusammensetzung ein Polyisocyanat sowie kolloidale Kieselsäure. Gemäß der Lehre dieser Schrift wird die organische Beschichtung vorzugsweise in einer Trockenfilm-Schichtstärke von 0,6 bis 1,6 µm aufgebracht, da dünnere Schichten als 0,1 µm zu dünn sind um Korrosionsschutz zu bewirken. Schichtstärken über 5 µm beeinträchtigen jedoch die Schweißbarkeit. In analoger Weise beschreibt die DE-A-3640662 ein oberflächenbehandeltes Stahlblech, umfassend ein zinküberzogenes oder mit einer Zinklegierung überzogenes Stahlblech, einem auf der Oberfläche des Stahlbleches gebildeten Chromatfilm und einer auf dem Chromatfilm gebildeten Schicht einer Harzzusammensetzung. Diese Harzzusammensetzung besteht aus einem basischen Harz, das durch Umsetzung eines Epoxidharzes mit Aminen hergestellt wird sowie einer Polyisocyanatverbindung. Auch dieser Film darf nur in Trockenfilmstärken von kleiner als etwa 3,5 µm aufgebracht werden, weil bei höheren Schichtstärken die Schweißfähigkeit stark herabgesetzt ist

Die EP-A-380024 beschreibt organische Beschichtungsmaterialien auf der Basis eines Bisphenol-A-Typ-Epoxidharzes mit einem Molekulargewicht zwischen 300 und 100.000 sowie einem Polyisocyanat bzw. blockiertem Polyisocyanat, pyrogener Kieselsäure sowie mindestens einem organischen Farbpigment Auch bei diesem Verfahren ist eine chromathaltige Vorbehandlung mit hoher Cr-Auflage erforderlich. Dabei darf die organische Schicht nicht dicker als 2 µm sein, da die Bleche mit dickeren organischen Schichten sich nicht befriedigend Punkt-schweißen lassen und die Eigenschaften des auf die organische Beschichtung aufgebrachten Elektrotauchlackes negativ beeinflußt werden.

JP63-205379 (Chemical Abstracts 110:20595) beschreibt ein Reaktionsprodukt, hergestellt aus einem mit carboxyl-terminiertem Dienkautschuk modifizierten Epoxidharz und einem Urethanprepolymer aus Polyetherpolyolen und Polyisocyanaten, hergestellt durch Erhitzen der Reaktionskomponenten für 3 Stunden auf 100 bis 120°C zur Erzeugung eines Copolymers. Dieses Bindemittel wird dann mit Dicyandiamid, Benzoguanamin, Toloylguanidin, Silikat und 30 phr Aluminiumpulver vermischt und auf ölige Stahlplatten appliziert um einen Klebstoff mit eine Schälfestigkeit von 20 kg/25mm und einer Zugfestigkeit von 3 kg/cm² zu ergeben. Eine leitfähige und schweißbare Korrosionsschutz-Zusammensetzung zur Beschichtung von Metalloberflächen wird in dieser Schrift nicht offenbart.

US-A-5429880 beschreibt Zusammensetzungen, die ein Reaktionsprodukt aus einem Epoxidharz, einem polyfunktionellen Amin ggf. einem Monoisocyanat oder Phosphorsäure sowie ein blockiertes Polyurethan enthalten. Weiterhin könne diese Zusammensetzungen Farbpigmente sowie Rostschutz - Additive enthalten. Diese Schrift offenbart keine Leitfähigkeitspigmente oder Metallpulver enthaltenden Bindemittel, die als leitfähige und schweißbare Korrosionsschutz-Zusammensetzungen zur Beschichtung von Metalloberflächen geeignet sind.

Es bestand also die Aufgabe, Beschichtungszusammensetzungen bereitzustellen, die den Anforderungen der Automobilindustrie in allen Punkten genügen. Im Vergleich zum bekannten Stand der Technik sollen die für das Coil-Coating-Verfahren geeigneten organischen Beschichtungszusammensetzungen in den folgenden Eigenschaften verbessert werden:
- niedrigere Einbrenntemperatur vorzugsweise nicht höher als 210 bis 235 °C PMT
- deutliche Reduzierung des Weißrostes auf verzinktem Stahlblech im Salzsprühtest nach DIN 50021, d.h. besserer Korrosionsschutz
- Verbesserung der Haftung der organischen Beschichtung auf dem metallischen Subtrat gemäß einer Bewertung nach dem T-Bend-Test (ECCA-Norm) und Impact-Test (ECCA-Norm)
- ausreichender Korrosionsschutz auch bei niedriger Cr-Auflage, vorzugsweise auch bei Cr-freien Vorbehandlungs-Verfahren.
- eine heute noch übliche Hohlraumversiegelung mit Wachs oder wachshaltigen Produkten soll wegen des verbesserten Korrosionsschutzes überflüssig werden
- punktschweißgeeignet.

Die Lösung der erfindungsgemäßen Aufgabe ist den Patentansprüchen zu entnehmen. Sie beinhaltet im wesentlichen die Bereitstellung von Beschichtungs-Zusammensetzungen, die als einziges organisches Bindemittel 10 bis 40 Gew.-% eines organischen Bindemittels, 0 bis 15 Gew.-% eines Korrosionsschutzpigmentes auf Silikatbasis, 40 bis 70 Gew.-% pulverförmiges Zink, Aluminium, Graphit und/oder Molybdändisulfid sowie 0 bis 30 Gew.-% eines Lösungsmittels enthalten, wobei das organische Bindemittel mindestens einem Epoxidharz, mindestens einem Härter ausgewählt aus Guanidin, substituierten Guanidinen, substituierten Harnstoffen, cyclischen tertiären Aminen und deren Mischungen sowie mindestens einem blockiertes Polyurethanharz.

Die Lösung der Aufgabe gemäß vorliegender Erfindung beinhaltet weiterhin die Verwendung der vorgenannten Zusammensetzung zum Beschichten von Blechen im Coil-Coating-Verfahren.

Weiterhin beinhaltet die erfindungsgemäße Lösung der Aufgabe ein Verfahren zur Beschichtung von Metalloberflächen mit einer leitfähigen organischen Korrosionsschicht gekennzeichnet durch die folgenden Schritte:
- herkömmliche Vorbehandlung bestehend aus
   - Reinigung
   - ggf. Phosphatierung
   - ggf.Chromatierung
   - ggf. chromfreie Vorbehandlung
- Beschichtung mit einer Zusammensetzung der vorgenannten Art in einer Schichtstärke von 1 bis 10 µm, vorzugsweise zwischen 2 und 5 µm
- Einbrennen der organischen Beschichtung bei Temperaturen zwischen 160 °C und 260 °C Peak Metal Temperature (PMT).

Bei den erfindungsgemäß zu beschichtenden Metalloberflächen handelt es sich vorzugsweise um Eisen (Stahlbleche), verzinkte und legierungsverzinkte Stähle, Aluminium oder Magnesium.

Als elektrisch leitfähig im Sinne dieser Erfindung soll eine Beschichtung verstanden werden, die unter den üblichen Bedingungen in Fügetechnik in der Automobilindustrie schweißbar, vorzugsweise nach dem Punktschweißverfahren schweißbar, ist. Weiterhin besitzen diese Beschichtungen eine ausreichende elektrische Leitfähigkeit, um eine vollständige Abscheidung von Elektrotauchlackierungen zu gewährleisten.

Ein wesentlicher Bestandteil des organischen Bindemittels der erfindungsgemäßen Korrosionsschutz-Zusammensetzung ist das Epoxidharz. Dabei kann ein Epoxidharz oder eine Mischung mehrerer Epoxidharze Verwendung finden. Das oder die Epoxidharze können dabei ein Molekulargewicht zwischen > 700 und 100.000 haben. Hierbei finden Epoxidharze mit mindestens 2 Epoxygruppen pro Molekül Verwendung, die ein Molekulargewicht über 700 haben, da die höhermolekularen Epoxide erfahrungsgemäß bei der Applikation zu keinen arbeitshygenischen Problemen führen. Grundsätzlich können eine Vielzahl von Epoxidharzen Verwendung finden, wie z.B. die Glycidylether des Bisphenols A oder die Glycidylether von Novolac-Harzen. Beispiele der erstgenannten Art sind unter den Handelnamen Epicote 1001, Epicote 1004, Epicote 1007, Epicote 1009 der Firma Shell Chemie im Handel. Ebenso wie die vorgenannten Epoxidharze können eine Vielzahl weiterer handelsüblichen Epoxidharze des Bisphenol-A-Glycidylether-Typs eingesetzt werden. Beispiele für Novolac-Epoxidharze sind die Araldit ECN-Typen der Firma Ciba Geigy, die DEN-Typen der Firma Dow Chemical sowie eine Vielzahl weiterer Hersteller.

Weiterhin können Epoxidgruppen-tragende Polyester als Epoxydharz-Bindemittel-Komponente eingesetzt werden, hierzu zählen auch die Epoxy-Derivate von Dimerfettsäuren.

Vorzugsweise sind diese erfindungsgemäß einzusetzenden Epoxidharze im lösungsmittelfreien Zustand bei Raumtemperatur fest, bei der Herstellung der Zusammensetzung werden sie als Lösung in einem organischen Lösungsmittel eingesetzt.

Der oder die Härter für das organische Bindemittel können Guanidin, substituierte Guanidine, substituierte Harnstoffe, cyclische tertiäre Amine, und deren Mischungen sein. Dabei können die Härter sowohl stöchometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Heptamethylisobiguanidin und Cyanoguanidin.

Beispiele für die katalytisch wirksamen substituierten Harnstoffe sind insbesondere der N'-(4-Chlorphenyl)-N,N-Dimethylharnstoff (Monuron) oder N'-(3,4-Dichlorphenyl)-N,N-Dimethylharnstoff (Diuron). Beispiele für katalytisch wirkende cyclisch tertiäre Alkyl-Amine sind Piperidinderivate, sowie Alkyl- oder Arylimidazole Stellvertretend für viele brauchbare Imidazolderivate seien genannt: N-Butylimidazol, N-C₁ bis C₁₂- Alkylimidazole. Weitere Beispiele für cyclische tertiäre Amin sind Diaza- aromatische tertiäre Amine wie z.B. Methylpyrazine, Diallyltetrahydrodipyridyl sowie hydrierte Pyridinbasen.

Blockierte Polyurethanharze im Sinne dieser Erfindung sind Di- oder Polyisocyanat-Verbindungen, die in an sich bekannter Weise durch Umsetzung von aliphatischen, alicyclischen oder aromatischen Isocyanaten mit wenigstens 2 Isocyanatgruppen pro Molekül mit Polyolen erhalten werden, wobei in dieser ersten Stufe die Isocyanatgruppen im stöchometrischen Überschuß gegenüber den Alkoholgruppierungen eingesetzt werden. In einer nachfolgenden Stufe werden dann die noch verbliebenen Isocyanatgruppen in an sich bekannter Weise mit Blockierungsmitteln für die Isocyanatgrupperierungen umgesetzt. Als Beispiele für einzusetzende Isocyanate seien genannt: m-Phenylendiisocyanat, p-Phenylendiisocyanat, 2,4-Tolylendiisocyanat (TDI), 2,6-Tolylendüsocyanat (TDI), p-Xyloldiisocyanat, Diphenylmethandiisocyanat (MDI), Hexamethylendiisoyanat, Dimersäure-Diisocyanat, 1-Isocyanatomethyl- 3-Isocyanato-1, 5,5-Trimethylcyclohexan (IPDI), hydriertes MDI (H₁₂MDI), Tetramethylxylylendiisocyanat (TMXDI), Biuretisierungsprodukt des Hexamethylendiisocyanates, Isocyanuratisierungsprodukt des Hexamethylendiisocyanates sowie Isocyanuratisierungsprodukt des IPDI.

Als Polyol können zweiwertige Alkohole wie Ethylenglykol, Propylenglykol, Butandiol, Hexandiol sowie deren hydroxyfunktionelle Umsetzungsprodukte mit Dicarbonsäuren (Polyester-Polyole) oder deren Alkoxylierungsprodukte mit Ethylenoxyd und/oder Propylenoxyd oder deren Mischungen (Polyether-Polyole) eingesetzt werden. Dabei können die vorgenannten zweiwertigen Alkohole ganz oder teilweise durch dreiwertige Starteralkohole wie Glycerin oder Trimethylolpropan oder vierwertige Alkohole wie Pentaerythrit ersetzt werden, dabei sind Polyesterpolyole bevorzugt.

Als Polyolkomponente können weiterhin hydroxyfunktionelle Acrylat- und/oder Methacrylathomo- oder Copolymere eingesetzt werden.

Als Blockierungsmittel (Schutzgruppe) für die nach der Umsetzung des Polyisocyanates mit dem Polyol verbleibenden Isocyanatgruppen können alle an sich bekannten Blockierungsmittel eingesetzt werden, beispielhaft erwähnt seien niedere aliphatische Monoalkohole wie Methanol, Ethanol, Propanol, Butanol oder Octylalkohol sowie Monoether von Ethylenglykol und/oder Diethylenglykol, aromatische HydroxyVerbindungen wie Phenol, Alkylphenole oder (Alkyl)cresole. Weiterhin können Oxime als Blockierungsmittel eingesetzt werden wie Acetonoxim, Methylethylketonoxim und ähnliche. Aus der Reihe der Lactam-Blockierungen sei das ε-Caprolactam genannt, weiterhin kommen CH-acide β-Dicarbonylverbindungen wie Malonester als Blockierungsmittel in Frage.

Besonders bevorzugt sind dabei organische Bindemittel, die ein blockiertes Polyurethanharz auf der Basis der reaktionsfähigeren aromatischen Polyisocyanate, insbesondere MDI in Abmischung mit einem blockierten Polyurethanharz auf der Basis aliphatischer Polyisocyanate. insbesondere des IPDI oder TMXDI enthalten.

Die Korrosionsschutz-Zusammensetzung enthält weiterhin 0 bis 30 Gew.-% eines Lösungsmittels oder eines Lösungsmittelgemisches, wobei ein Teil dieses Lösungsmittels bzw. Lösungsmittelgemisches bereits durch die Epoxydharzkomponente bzw. Polyurethanharzkomponente eingebracht werden kann, dies gilt insbesondere wenn hierfür handelsübliche Bindemittelkomponenten eingesetzt werden. Als Lösungsmittel eignen sich dabei alle in der Lacktechnik gebräuchlichen Lösungsmittel auf der Basis von Ketonen wie z.B. Methylethylketon, Methylisobutylketon, Methyl-n-Amylketon, Ethylamylketon, Acetylaceton, Diacetonalkohol. Weiterhin können aromatische Kohlenwasserstoffe wie Toluol, Xylol oder deren Mischungen eingesetzt werden sowie aliphatische Kohlenwasserstoffmischungen mit Siedepunkten zwischen 80 und 180 °C. Weitere geeignete Lösungsmittel sind beispielsweise Ester wie Ethylacetat, n-Butylacetat, Isobutylisobutyrat oder Alkoxyalkylacetate wie Methoxypropylacetat oder 2-Ethoxyethylacetat. Weiterhin seien monofunktionelle Alkohole wie Isopropylalkohol, n-Butanol, Methylisobutylcarbinol oder 2-Ethoxyethanol oder Monoalkylether von Ethylenglycol, Diethylenglycol oder Propylenglycol stellvertretend für viele geeignete Lösungsmittel genannt. Es kann zweckmäßig sein, Mischungen der vorgenannten Lösungsmittel einzusetzen.

Weiterhin enthält die leitfähige und schweißbare Korrosionsschutz-Zusammensetzung feinteilige leitfähige Füllstoffe gemäß Komponente c) von Anspruch 1 in Mengen zwischen 40 und 70 Gew.-%, nämlich pulverförmiges Zink, pulverförmiges Aluminium, Graphit und/oder Molybdänsulfid, Ruß, Eisenphosphid.

Zusätzlich können 0 bis 15 Gew.-% Korrosionsschutzpigmente auf Silikatbasis eingesetzt werden. Derartige Korrosionsschutzpigmente sind an sich bekannt, beispielhaft genannt seien Zink-Calcium-Aluminium-Strontiumpolyphosphat-Silikathydrat, Zinkborwolframsilikat, dotiertes SiO₂.

Weiterhin können gängige an sich bekannte Additive wie z.B. Gleitmittel, lösliche Farbstoffe oder Farbpigmente sowie Netzmittel und Verlaufshilfsmittel mitverwendet werden.

Die erfindungsgemäßen leitfähigen, schweißbaren Korrosionsschutz-Zusammensetzungen eignen sich insbesondere zur Beschichtung von Blechen nach dem Coil-Coating-Verfahren. Dabei werden die Bleche zunächst herkömmlichen Vorbehandlungsverfahren unterworfen wie z.B. Reinigung und Entfettung. Gegebenenfalls können sich herkömmliche Phosphatierungsverfahren und Chromatierungsverfahren anschließen. Ein besonderer Vorzug der erfindungsgemäßen Korrosionsschutz-Zusammensetzungen ist, daß hierbei auch Chrom-freie Vorbehandlungsverfahren erfolgreich verwendet werden können.

Nach der Vorbehandlung erfolgt die Beschichtung mit der erfindungsgemäßen Korrosionsschutz-Zusammensetzung nach einem der gängigen Beschichtungsverfahren im Coil-Coating-Prozeß. Dabei werden Schichtdicken von (Trockenfilmstärke) 1 bis 10 µm, insbesondere 2 bis 5 µm besonders bevorzugt. Das Einbrennen der organischen Beschichtung erfolgt bei Temperaturen zwischen 160 ° C und 260 °C Peak Metal Temperature (PMT). vorzugsweise zwischen 180 ° C und 235 ° C PMT.

In den nachfolgenden Beispielen soll die Erfindung näher erläutert werden. Bei den Zusammensetzungen sind dabei alle Mengenangaben Gewichtsteile, wenn nicht anders angegeben.

Die in der Tabelle 1 aufgeführten Zusammensetzungen gemäß Beispiel 1 bis 10 wurden durch Vermischen der Bindemittel, Härter, Füllstoffe, Pigmente, Lösungsmittel und Additive hergestellt. Dabei wurde ein Teil der Lösungsmittel bereits mit dem Lösungsmittel-haltigen Polyurethanbindemittel bzw. Härter in die Zusammensetzung eingetragen. Die Mischung erfolgte mit in der Lacktechnik üblichen Mischaggregaten (Dissolver) bis zur Homogenität der Zusammensetzung.

Es wurden 0,8 mm starke Stahlbleche (ZE 50/50) in üblicher Weise mit einer no rinse Chromatierung mit Granodine 4513 (Fa. Henkel) versehen und anschließend mit den erfindungsgemäßen organischen leitfähigen Beschichtungen beschichtet, so daß eine Trockenfilmstärke von etwa 3 µm entstand. Die Einbrenntemperatur betrug etwa 215 ° C PMT. Anschließend wurden die so beschichteten Bleche mit einer herkömmlichen KTL-Beschichtung versehen, worauf diese gemäß Stand der Technik ausgehärtet wurde.

Wie aus den Testergebnissen in der Tabelle 2 ersichtlich ist, bewirken alle erfindungsgemäßen Beschichtungen einen ausgezeichneten Korrosionsschutz. Außerdem sind die erfindungsgemäßen organischen Beschichtungen gegen die Standardlösungsmittel (Methylethylketon) hinreichend beständig, wie aus dem MEK-Test ersichtlich ist.

In Vergleichsversuchen wurde das Haftverhalten der erfindungsgemäßen Zusammensetzung gemäß Beispiel 11 mit einer Zusammensetzung gemäß Stand der Technik verglichen. Wie aus den Versuchsergebnissen der Tabelle 3 hervorgeht, bewirken sowohl die erfindungsgemäßen Zusammensetzungen als auch die Vergleichszusammensetzung gemäß Stand der Technik einen guten Korrosionsschutz solange die beschichteten Substrate nicht einer mechanischen Belastung unterworfen sind. Die Vorbehandlung der Substrate bei den Versuchen gemäß Tabelle 3 erfolgte in ähnlicher Weise wie vorbeschrieben durch eine no rinse Chromatierung, wobei auf eine Phosphatierung verzichtet wurde. Da das Haftverhalten dieser Beschichtungen getestet werden sollte, wurde keine KTL-Beschichtung vorgenommen. Wie aus den Ergebnissen in Tabelle 3 ersichtlich, ist die erfindungsgemäße Beschichtung gemäß Beispiel 11 sowohl bei schlagartiger Belastung (reverse impact) als auch beim Biegetest (t-bend) als auch beim Abriebtest der Beschichtung gemäß Stand der Technik deutlich überlegen.

## Patentansprüche

1. Leitfähige und schweißbare Korrosionsschutz-Zusammensetzung zur Beschichtung von Metalloberflächen **dadurch gekennzeichnet, daß** sie
a) als einziges organisches Bindemittel 10 bis 40 Gew.-% eines organischen Bindemittels bestehend aus
aa) mindestens einem Epoxidharz mit mindestens 2 Epoxygruppen pro Molekül und einem Molekulargewicht über 700,
ab) mindestens einem Härter ausgewählt aus Guanidin, substituierten Guanidinen, substituierten Harnstoffen, cyclischen tertiären Aminen und deren Mischungen, und
ac) mindestens einem blockierten Polyurethanharz,
b) 0 bis 15 Gew.-% eines Korrosionsschutzpigments auf Silicatbasis
c) 40 bis 70 Gew.-% pulverförmiges Zink, Aluminium, Graphit und/oder Molybdänsulfid, Ruß, Eisenphosphid
d) 0 bis 30 Gew.-% eines Lösungsmittels enthalten.

2. Zusammensetzung nach Anspruch 1 **dadurch gekennzeichnet, daß** als Epoxidharz mindestens ein Epoxid auf der Basis Bisphenol A-Glycidylether mit einem Molgewicht von mindestens 800 verwendet wird.

3. Zusammensetzung nach Anspruch 1, **dadurch gekennzeichnet, daß** als substituierte Guanidine Methylguanidin, Dimethylguanidin, Tetramethylguanidin, Methylisobiguanidin, Tetramethylisobiguanidin, Heptamethylisobiguanidin, Cyanoguanidin, als substituierter Harnstoff N'-(3,4-Dichlorphenyl)-N,N-Dimethylharnstoff, N'-(4-Chlorphenyl)-N,N-Dimethylharnstoff und/oder als cyclisches tertiäres Amin Imidazol, Alkyl- oder Arylimidazole verwendet werden.

4. Zusammensetzung nach Anspruch 1, **dadurch gekennzeichnet, daß** als Polyurethanharz ein oder mehrere Polyesterprepolymere auf der Basis von aromatischen und/oder aliphatischen Di- oder Polyisocyanaten verwendet wird, wobei die Isocyanat-Endgruppen durch an sich bekannte Blockierungsmittel blockiert sind.

5. Verwendung der Zusammensetzung gemäß einem der vorhergehenden Ansprüche zum Beschichten von Blechen in Coil-Coating Verfahren.

6. Verfahren zur Beschichtung von Metalloberflächen mit einer leitfähigen organischen Korrosionsschutzschicht **gekennzeichnet durch** die folgenden Schritte
- herkömmliche Vorbehandlung bestehend aus
- Reinigung
- Beschichten mit einer Zusammensetzung gemäß einem der vorhergehenden Ansprüche in einer Schichtdicke von 1 bis 10 µm, vorzugsweise zwischen 2 und 5 µm
- Einbrennen der organischen Beschichtung bei Temperaturen zwischen 160 ° und 260 °C Peak Metal Temperature (PMT).

7. Verfahren nach Anspruch 6 **dadurch gekennzeichnet, daß** sich bei der herkömmlichen Vorbehandlung an die Reinigung ein Phosphatierverfahren und / oder ein Chromatierungs-Verfahren und / oder ein Chrom-freies Vorbehandlungsverfahren anschließt.

8. Verfahren nach Anspruch 6 oder 7 **dadurch gekennzeichnet, daß** die Metalloberflächen Eisen (Stahl), verzinkte oder legierungsverzinkte Stähle, Aluminium oder Magnesium sind.

## Claims

1. A conductive and weldable anti-corrosive coating composition for coating metal surfaces, **characterized in that** it contains:
(a) as the sole organic binder 10 to 40 wt. % of an organic binder consisting of:
(aa) at least one epoxy resin with a molecular weight of more than 700 containing at least 2 epoxy groups per molecule ;
(ab) at least one curing agent selected from guanidine, substituted guanidines, substituted ureas, cyclic tertiary amines and mixtures thereof;
(ac) at least one blocked polyurethane resin,
(b) 0 to 15 wt. % of a silicate-based anti-corrosive pigment,
(c) 40 to 70 wt. % of powdered zinc, aluminum, graphite and/or molybdenum disulfide, carbon black, iron phosphide,
(d) 0 to 30 wt. % of a solvent.

2. A composition as claimed in claim 1 wherein at least one epoxy based on bisphenol A glycidyl ether and having a molecular weight of at least 800 is used as the epoxy resin.

3. A composition as claimed in claim 1 wherein the substituted guanidines used are methylguanidine, dimethylguanidine, tetramethylguanidine, methylisobiguanidine, tetramethylisobiguanidine, heptamethyliso-biguanidine, cyanoguanidine, the substituted urea is N'-(3,4-dichloro-phenyl)-N,Ndimethylurea, N'-(4-chlorophenyl)-N,N-dimethylurea, and/or the cyclic tertiary amine used is imidazole, alkyl- or arylimidazoles.

4. A composition as claimed in claim 1 wherein the polyurethane resin used comprises one or more polyester prepolymers based on aromatic and/or aliphatic di- or polyisocyanates, the isocyanate end groups being blocked by known blocking agents.

5. Use of a composition as claimed in any of the preceding claims for coating sheet metal in the coil coating process.

6. A process for coating metal surfaces with a conductive organic anti-corrosive layer, **characterised by** the following stages:
• conventional pretreatment consisting of
• cleaning
• coating with a composition as claimed in one of the preceding claims to a film thickness of 1 to 10 µm, preferably of between 2 and 5 µm
• stoving of the organic coating at temperatures of between 160 and 260 °C peak metal temperature (PMT).

7. A process as claimed in claim 6 wherein in the conventional pretreatment the cleaning stage is followed by a phosphating process and/or a chromating process and/or a chromium-free pretreatment.

8. A process as claimed in claim 6 or 7 wherein the metal surfaces are iron (sheet steel), galvanized and alloy-galvanised steels, aluminum or magnesium.

## Revendications

1. Composition conductrice et soudable de protection contre la corrosion pour le revêtement de surfaces métalliques, **caractérisée en ce qu'**elle contient
a) comme seal liant organique à concurrence de 10 à 40 % en poids, un liant organique consistant en
aa) au moins une résine époxyde, dont le poids molaire s'élève plus de 700 avec au moins 2 groups epoxyde
ab) au moins un durcisseur choisi parmi le groupe comprenant la guanidine, des guanidines substituées, des urées substituées,
des amines tertiaires cycliques et leurs mélanges,
ac) au moins une résine de polyuréthane bloquée,
b) à concurrence de 0 à 15 % en poids, un pigment de protection contre la corrosion à base de silicate,
c) à concurrence de 40 à 70 % en poids, du zinc, de l'aluminium, du graphite et/ou du sulfure de molybdène pulvérulent, du noir de carbone, du phosphure de fer,
d) à concurrence de 0 à 30 % en poids, un solvant.

2. Composition selon la revendication 1, **caractérisée en ce qu'**on utilise, à titre de résine époxyde, au moins un époxyde à base de bisphénol A-éther glycidylique, dont le poids molaire s'élève à au moins 800.

3. Composition selon la revendication 1, **caractérisée en ce qu'**on utilise, à titre de guanidines substituées, de la méthylguanidine, de la diméthyl-guanidine, de la tétraméthylguanidine, de la méthylisobiguanidine,
de la tétraméthylisobiguanidine, de l'heptaméthylisobiguanidine,
de la cyanoguanidine, à titre d'urée substituée, de la N'-(3,4-dichlorophényl)-N,N-diméthylurée, de la N'-(4-chlorophényl)-N, N-diméthylurée et/ou à titre d'amines tertiaires cycliques, de l'imidazole, des alkyl- ou des arylimidazoles.

4. Composition selon la revendication 1, **caractérisée en ce qu'**on utilise, à titre de résine de polyuréthane, un ou plusieurs prépolymère de polyesters à base de diisocyanates ou de polyisocyanates aromatiques et/ou aliphatiques, les groupes terminaux isocyanates étant bloqués par des agents de blocage connus en soi.

5. Utilisation de la composition selon l'une quelconque des revendications précédentes, pour le revêtement de tôle dans le procédé de prérevêtement en continu (coil coating).

6. Procédé pour le revêtement de surfaces métalliques à l'aide d'une couche conductrice de type organique de protection contre la corrosion, **caractérisé par** les étapes ci-après :
- un prétraitement habituel constitué par
- un nettoyage
- un revêtement avec une composition selon l'une quelconque des revendications precedents pour obtenir une épaisseur de couche de 1 à 10 µm, de préférence entre 2 et 5 µm
- une cuisson du revêtement organique à des températures entre 160 ° et 260 °C de la temperature pic-métal (PMT = Peak Metal Temperature).

7. Procédé selon la revendication 6, **caractérisé en ce que**, dans le prétraitement habituel, un procédé de phosphatage et/ou un procédé de chromatage et/ou un procédé de prétraitement exempt de chrome fait/font suite au nettoyage.

8. Procédé selon la revendication 6 ou 7, **caractérisée en ce que** les surfaces métalliques représentent du fer (de l'acier), des aciers revêtus de zinc ou alliés au zinc, de l'aluminium ou du magnésium.
